# FASCICULE DE BREVET EUROPEEN

(11) **EP 0 281 451 B1**
(45) Date de publication et mention de la délivrance du brevet: **20.01.1993**
(21) Numéro de dépôt: 88400302.1
(22) Date de dépôt: 10.02.1988
(51) Int. Cl.: A01G 13/02

(54) **Machine de déroulement d'un film plastique utilisé en agriculture**
Maschine zum Abwickeln einer in der Landwirtschaft verwendeten Plastikfolie
Machine for unrolling a plastic sheet used in agriculture

(30) Priorité: 17.02.1987 FR 8702047
(43) Date de publication de la demande: 07.09.1988
(73) Titulaire: KAYSERSBERG PACKAGING (ancienne sté. CHOUANARD), 68240 KAYSERSBERG (FR)
(72) Inventeur: Hoeft, Benoît, F-68240 Kaysersberg (FR)
(74) Mandataire: David, Daniel

(56) Documents cités:
- WO-A-86/00780
- CH-A- 596 748
- FR-A- 2 123 956
- GB-A- 1 504 967

## Description

La présente invention concerne essentiellement une machine de déroulement d'un film plastique utilisé en agriculture, dans les cultures notamment maraîchères utilisant une bobine de stockage ou de renvoi de film entrainée en rotation par certains rouleaux supports de celle-ci constituant des rouleaux d'entraînement.

On connaît déjà par le document FR-A-2 235 642 une machine dérouleuse d'un film plastique utilisé en agriculture, dans les cultures maraîchères en planche, ou dans la culture de la vigne.

Une telle machine est destinée à être tractée par un moyen de traction, tel qu'un tracteur et comprend :
- un châssis formant caisson monté sur roues, de préférence au moins quatre roues, des moyens de stockage du film étant prévus à l'intérieur et/ou à l'extérieur dudit caisson comprenant avantageusement une bobine de stockage ou de renvoi de film montée en rotation relativement au châssis ;
- des moyens de déroulement d'un film depuis ladite bobine de stockage ou de renvoi de film par rotation de ladite bobine ;
- des moyens d'ouverture d'un sillon dans le sol au niveau de chaque extrémité dudit film ;
- des moyens de maintien des bords du film dans lesdits sillons formés, pouvant comprendre des roues de plombage ; et
- des moyens d'enfouissement du film maintenu dans chaque sillon formé.

Selon une telle machine, le film est en pratique tiré de la bobine de stockage ou de renvoi du film par les roues de plombage, le tirage du film donnant lieu à des problèmes de tension irrégulière, tandis qu'il est nécessaire d'éviter la formation de plis.

Or, la formation de plis est dans certains cas nécessaire pour adapter le film à la forme de tunnel ou de butte. En outre, la tension exercée sur le film ne doit pas être trop forte mais au contraire la plus molle possible, ce qui ne peut pas être atteint dans le cas d'un tirage du film par les roues de plombage.

De même, le document FR-A-2 452 871 décrit une machine de bâchage agricole de conception similaire, selon laquelle le film est extrait de la bobine de stockage à l'aide d'au moins deux moyens presseurs de bande constituant des moyens de tirage de celle-ci.

De même, le document CH 596748, qui comporte toutes les caractéristiques des préambule de la revendication 1, décrit une machine de bâchage avec un moyen de tirage du film constitué par deux cylindres dont l'un est entraîné à partir d'une roue reposant sur le sol.

De même, le document FR 2123956 décrit un dispositif auto-moteur pour le déroulement de bâches selon lequel la bobine repose sur un berceau constitué par deux tubes dont l'un est accouplé par une liaison cinématique à l'une des roues du chariot.

La présente invention a donc pour but de résoudre le nouveau problème technique consistant en la fourniture d'une solution permettant de déposer le film sur le sol, tout en permettant de faire varier à volonté la vitesse de déroulement du film par rapport à la vitesse de déplacement de la machine.

La présente invention a encore pour but de résoudre le nouveau problème technique consistant en la fourniture d'une solution permettant le déroulement d'un film avec formation de plis à volonté.

La présente invention a encore pour but de résoudre le nouveau problème technique consistant en la fourniture d'une solution permettant un déroulement de film d'une très grande largeur, par exemple égale à plusieurs mètres, en particulier au moins égale à environ cinq ou six mètres, tout en permettant de modifier cette largeur du film à volonté.

Ces nouveaux problèmes techniques sont résolus pour la première fois par la présente invention d'une manière satisfaisante, tout en étant d'une conception particulièrement simple.

La présente invention se rapporte à une machine de déroulement d'un film plastique utilisé en agriculture dans les cultures. notamment maraîchères, destinée à être tracée par un moyen de traction, tel qu'un tracteur, comprenant un châssis monté sur roues supports, de préférence au moins quatre roues, une bobine de stockage de film étant prévue à l'intérieur dudit châssis, et étant entraînée en rotation relativement au châssis par l'intermédiaire d'un moyen de transmission depuis une roue reposant sur le sol ; des moyens d'ouverture d'un sillon dans le sol au niveau de chaque bord dudit film ; des moyens de maintien des bords du film dans chaque sillon formé, pouvant comprendre des roues de plombage ; et des moyens d'enfouissement du film maintenus dans chaque sillon formé ; caractérisée en ce que :
- ladite bobine est montée en rotation sur des rouleaux supports ; et au moins une des roues supports du châssis, de préférence au moins une des roues supports disposées à l'avant du châssis dans le sens de traction (M), constitue une roue de traction entraînant en rotation certains rouleaux supports de la bobine par l'intermédiaire de moyens de transmission d'entraînement comprenant un variateur mécanique permettant de faire varier à volonté le rapport de transmission entre la roue de traction et les rouleaux d'entraînement de la bobine.
- elle comprend des moyens de plissage du film dans le sens transversal pour donner du mou au film et permettre la levée des plantes, notamment des céréales, lesdits moyens étant disposés en-dessous du châssis et comprennant au moins un ensemble de trois tubes détendeurs à bord coudé, l'un de tube détendeur étant disposé entre les deux autres tubes détendeurs à un niveau supérieur et en opposition.

Selon un mode de réalisation préféré, au moins deux roues disposées à l'avant du châssis, à chaque extrémité de celui-ci, constituent des roues de traction. Avantageusement, les deux roues de traction entraînent un arbre intermédiaire commun avantageusement cannelé entraînant à son tour les rouleaux d'entraînement en rotation de la bobine.

Selon un autre mode de réalisation particulier, cette machine comprend des moyens de déplacement de l'ensemble des moyens permettant de modifier l'empattement du film, de préférence en montant les roues de traction, de plombage, les moyens de plissage éventuels et les moyens d'enfouissement sur un chariot monté déplaçable transversalement sur un guide.

Selon un autre mode de réalisation particulier, cette machine comprend des tubes ou rouleaux de contournement ou de renvoi du film, disposés en amont des rouleaux supports et/ou d'entraînement par rapport au sens de déplacement du film.

Selon une autre variante de réalisation, cette machine comprend des rouleaux de contournement ou de renvoi disposés en aval des rouleaux supports et/ou d'entraînement, par rapport au sens de déplacement du film.

On conçoit ainsi que l'on obtient une machine permettant de réaliser une dépose du film, quelle que soit sa largeur, avec une synchronisation de la vitesse d'avancement de la machine avec la vitesse de déroulement du film, cette machine étant d'une conception particulièrement simple.

En outre, la présence d'un variateur mécanique permet d'ajuster la tension du film à l'état de la bobine et de la conformation du terrain.

Grâce à la dépose, le film est soumis à une tension faible, le film pouvant être adapté à volonté à la forme d'un tunnel ou d'une butte, et ceci quelle que soit la largeur du film.

En outre, selon la présente invention, on peut réaliser des plissages du film à volonté grâce à la présence de moyens de plissage qui sont avantageusement disposés le plus près possible des roues de plombage, ici en-dessous du châssis, pour ne pas déformer le film et permettre de le ramener au niveau des roues de plombage. De préférence, ces moyens de plissage du film sont aussi montés sur le chariot monté déplaçable transversalement sur un guide.

Ainsi, on obtient un système mécanique simplifié permettant de modifier l'empattement à volonté, quelle que soit la largeur du film.

Selon une autre caractéristique préférée, chaque roue de traction est disposée dans l'axe des moyens d'ouverture d'un sillon dans le sol, tel qu'un disque d'ouverture, ce qui permet de diminuer l'encombrement latéral, et de tasser la terre devant le disque en facilitant ainsi l'ouverture du sillon.

D'autre part, cette machine est conçue avec des moyens supports de roues permettant d'offrir une garde au sol importante de la machine.

On comprend ainsi que l'invention permet de fournir une machine de déroulement d'un film apportant un progrès technique déterminant, totalement inattendu pour un homme du métier.

Il est à noter que l'expression "film" ou "film plastique" englobe tout produit pouvant être présenté sous forme de bande continue de longueur conséquente. Ceci inclut naturellement des films pouvant comporter des orifices ou découpes pouvant se présenter après déroulement avec des ouvertures pour présenter l'aspect d'un filet ou similaire. De même, la nature du film peut être quelconque mais on conçoit qu'elle doit être adaptée à l'utilisation envisagée, ce qui est tout à fait à la portée de l'homme de l'art.

D'autres buts, caractéristiques et avantages de l'invention apparaîtront clairement à la lumière de la description explicative qui va suivre faite en référence aux dessins annexés représentant un mode de réalisation actuellement préféré de l'invention, selon deux variantes principales, donné à titre simplement d'illustration et qui ne saurait donc en aucune façon limiter la portée de l'invention. Dans les dessins :
- la figure 1 est une vue en perspective schématique d'une machine de déroulement de film selon la présente invention, montrant les organes essentiels ;
- la figure 2 est une vue frontale, en élévation, également schématique, de la machine représentée à la figure 1 ;
- la figure 3 est une vue en élévation, latérale, en coupe transversale partielle, de la machine représentée à la figure 1;
- la figure 4 représente une vue de détail des moyens de plissage du film selon l'invention ;
- la figure 5 représente une vue similaire à celle de la figure 3, selon une variante de réalisation ; et
- la figure 6 représente une vue de détail, agrandie des moyens permettant de modifier l'empattement par la présence d'un chariot monté déplaçable transversalement sur un rail guide.

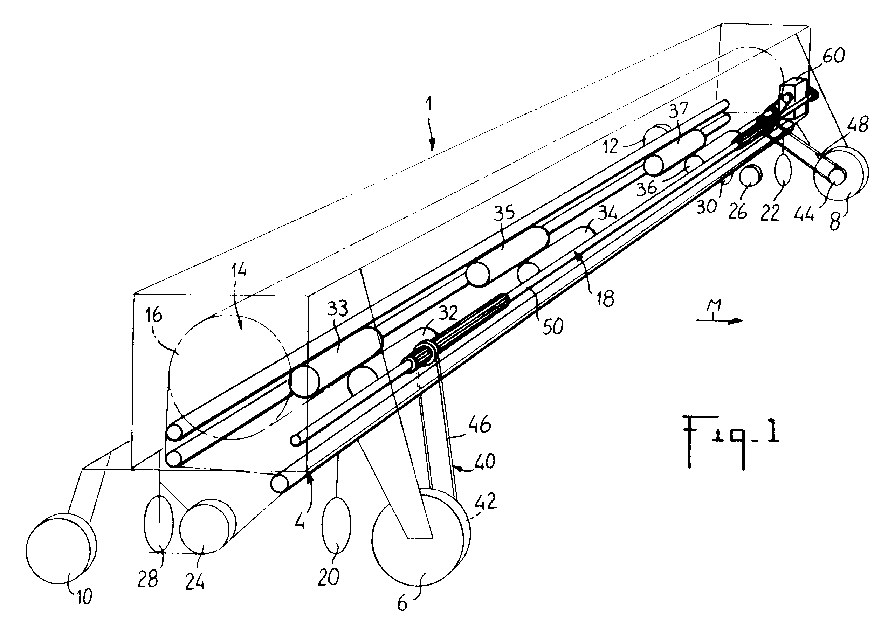

En référence plus particulièrement aux figures 1 à 3, une machine selon la présente invention représentée par le numéro de référence général 1, pour le déroulement d'un film par exemple plastique représenté schématiquement par le numéro de référence 2, qui est utilisé en agriculture dans les cultures, notamment maraîchères, est destinée à être tractée par un moyen de traction, tel qu'un tracteur. Le dispositif d'accrochage du moyen de traction n'a pas été représenté dans les dessins pour éviter de compliquer les dessins. Il s'agit avantageusement d'un système d'accrochage trois points classiques.

Cette machine (1) comprend un châssis (4) formant caisson monté sur roues telles que (6, 8, 10, 12), de préférence au moins quatre roues, comme représenté ; des moyens (14) de stockage ou de renvoi du film sont prévus à l'intérieur du caisson (4) et comprennent avantageusement une bobine (16) de stockage ou de renvoi du film, montée en rotation relativement au châssis.

Cette machine comprend aussi des moyens (18) de déroulement du film depuis la bobine (16) de stockage ou de renvoi de film, par rotation de la bobine (16), des moyens tels que (20, 22) d'ouverture d'un sillon dans le sol au niveau de chaque bord (2a, 2b) du film (2) ; des moyens (24, 26) de maintien des bords (2a, 2b) du film (2) dans chaque sillon formé ; et des moyens (28, 30) d'enfouissement des bords (2a, 2b) du film (2) maintenus dans chaque sillon formé.

Selon la présente invention, cette machine est caractérisée en ce que la bobine (16) est montée en rotation sur des rouleaux supports (32, 33) ; (34, 35) ; (36, 37) ; et au moins une (6, 8) des roues supports (6, 8, 10, 12), de préférence au moins une (6, 8) des roues (6, 8), disposées à l'avant du châssis dans le sens de traction, constitue une roue de traction entraînant par des moyens de transmission d'entraînement appropriés (40) certains rouleaux supports (tels que 32, 36) de la bobine (16) qui constituent alors des rouleaux d'entraînement en rotation de la bobine (16). Selon l'exemple de réalisation représenté, les moyens d'entraînement (40) peuvent comprendre une roue dentée (42, 44) respectivement solidaire de la roue de traction (6, 8) sur laquelle vient engrener une chaîne de transmission d'entraînement (46, 48) aboutissant à un arbre intermédiaire (50), qui dans le cas de l'emploi de deux roues de traction (6, 8), comme représenté, est un arbre intermédiaire (50) commun qui est avantageusement cannelé et entraîne à son tour une chaîne ou courroie de transmission, par exemple (52), figure 3, aboutissant à une roue correspondante, telle que (54), solidaire du rouleau d'entraînement correspondant, tel que (36) constituant en même temps un rouleau support.

Avantageusement, on prévoit que les moyens de transmission d'entraînement (40) comprennent un variateur mécanique (60) de type classique, interposé entre l'arbre (50) et les rouleaux d'entraînement tels que (32, 36) en permettant ainsi de faire varier le rapport de transmission entre les roues de traction (6, 8) et les rouleaux d'entraînement (32, 36). On conçoit que le film (2) est dévidé de la bobine (16) grâce à la rotation des rouleaux d'entraînement (32, 36). Ce film (2) peut ensuite passer avantageusement sur des tubes ou rouleaux de contournement ou de renvoi tels que (62, 64), figure 3, disposés ici en amont des rouleaux supports (33, 35, 37, 34) et/ou d'entraînement (32, 36) relativement au sens de marche symbolisé par la flèche M. Ce film (2) passe en-dessous du châssis (4) au travers d'un orifice transversal (66) de longueur adaptée à la plus grande largeur de film possible à dérouler de la bobine (16). Le film (2) aboutit ensuite aux moyens d'application (24, 26), formés de préférence par des roues dites de plombage, comme représenté, maintenant le film dans les sillons formés par les moyens d'ouverture (20, 22), en général constitués par des disques ou similaires.

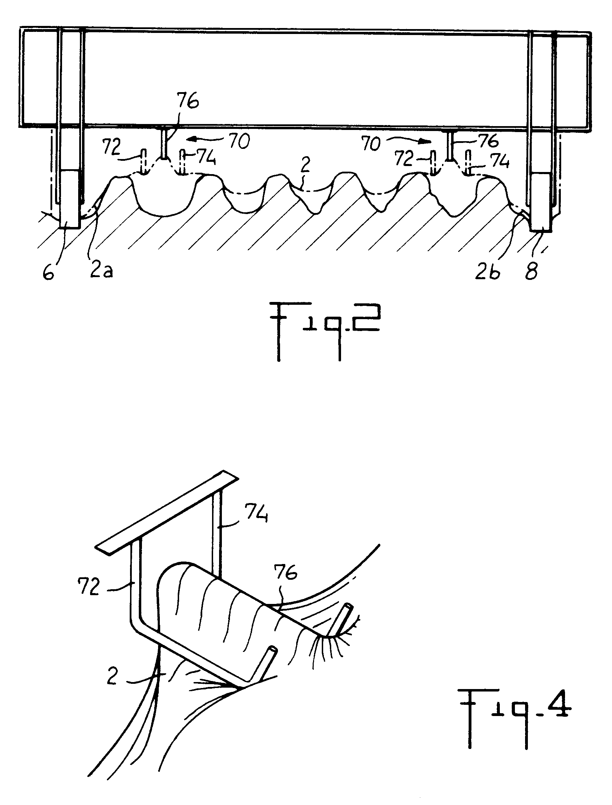

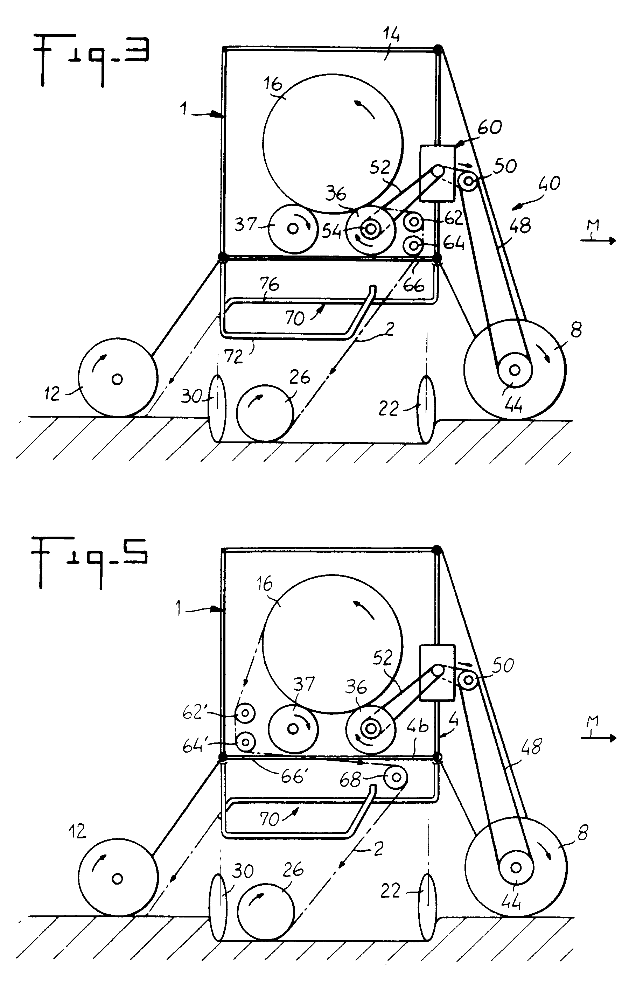

Selon l'invention, on prévoit des moyens (70) de plissage du film, de préférence au moins deux moyens (70) disposés symétriquement par rapport au plan de symétrie transversal de la machine. Ces moyens de plissage (70) de préférence sont disposés en-dessous du châssis (4), comme représenté pour être le plus près possible du sol, et donc des moyens de maintien (24, 26) formés par des roues de plombage. Ces moyens de plissage (70), de préférence comprennent au moins un ensemble de trois tubes détendeurs que l'on voit bien à partir de la considération des figures 2 à 4, respectivement référencés (72, 74, 76). Ces tubes détendeurs ont des bords coudés pour éviter une déchirure du film (2). Un tube, ici (76), est disposé entre les deux autres tubes, ici (72) et (74), à un niveau supérieur et en opposition, le plus près de l'arrivée du film en permettant ainsi un plissage du film comme cela est clairement compréhensible à partir de la considération de la figure 4. On comprend que l'on peut disposer autant de moyens de plissage (70) du film que de plis que l'on souhaite réaliser transversalement dans le film.

Selon la variante de réalisation représentée à la figure 5, on peut prévoir les tubes ou rouleaux de contournement ou de renvoi (62', 64') disposés à l'arrière des rouleaux supports et/ou d'entraînement. Ceci permet de faire passer le film (2) par une ouverture (66') disposée également à l'arrière de la paroi formant fond (4b) du châssis (4) mais il est alors nécessaire de prévoir un rouleau de renvoi supplémentaire (68) avant les moyens de plissage (70). Ce renvoi supplémentaire (68) sera avantageusement lui aussi entraîné, par l'intermédiaire d'une chaîne ou d'une courroie non représentée, par le moyen de transmission d'entraînement (40). Chacune de ces variantes présente donc ses avantages propres qui sont tout à fait compréhensibles à l'homme du métier.

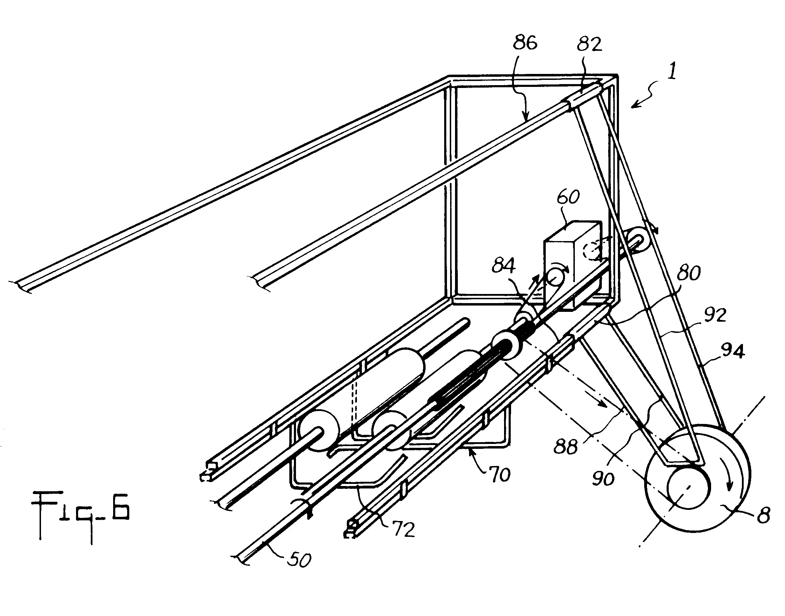

Selon un mode de réalisation particulier, tel que représenté à la figure 6, on prévoit des moyens permettant de modifier à volonté l'empattement, comprenant de préférence un chariot défini par des éléments tels que (80, 82) montés déplaçables transversalement sur un rail guide correspondant défini par exemple ici par des barres telles que (84, 86) définissant des bords longitudinaux du châssis (4). Selon l'exemple de réalisation représenté, au moins les roues de traction (6, 8) sont montées en rotation sur des barres (88, 90, 92, 94) associées deux par deux, solidarisées aux éléments précités (80, 82) constituant une partie du chariot précité. Ces éléments (80, 82) étant montés déplaçables transversalement par rapport au sens de marche M en étant déplaçable relativement aux bords longitudinaux (84, 86) définissant le châssis (4).

Selon un mode de réalisation également préféré, également les moyens d'ouverture, tels que des disques (20, 22) sont montés dans l'axe des roues de traction (6, 8) et déplaçables en translation en étant solidarisés des mêmes éléments tels que (80), figure 6 constituant une partie du chariot déplaçable transversalement. De même, les moyens de plissage peuvent être solidarisés de ces éléments tels que (80) pour être déplacés simultanément. Il en est également de même des moyens (24, 26) de maintien des bords du film (2) et des moyens d'enfouissement (28, 30).

On conçoit ainsi que l'on peut déplacer simultanément l'ensemble de tous les moyens permettant de modifier l'empattement du film et permettant sa dépose correcte et son enfouissement correct, avec une grande simplicité.

Ceci est en particulier obtenu en prévoyant que les roues d'entraînement (6, 8) et de support (10, 12) du châssis (4) sont réalisées en dehors de l'empattement du châssis (4), comme représenté tout en permettant une garde au sol importante afin de pouvoir franchir tout type de terrain.

On comprend que le fonctionnement d'un tel dispositif est particulièrement simple et permet de réaliser le procédé précédemment décrit.

Naturellement, l'invention comprend tous les moyens constituant des équivalents techniques des moyens décrits ainsi que leurs diverses combinaisons. Ainsi, la bobine (16) peut être une bobine de stockage de film (2). Selon une variante, on peut prévoir que cette bobine (16) soit une bobine de renvoi d'un film usagé replié en accordéon sur le sol ou sur un moyen support fixé extérieurement au châssis (4), comme décrit à la figure 5 du FR-A-2 235 642. Naturellement, le plus simple, surtout pour des films de grande largeur, est d'utiliser une bobine de stockage de film (2) n'ayant jamais servi mais le réemploi de film (2) peut être envisagé sans sortir du cadre de l'invention.

## Revendications

1. Machine de déroulement d'un film plastique (2) utilisé en agriculture dans les cultures, notamment maraîchères, destinée à être tractée par un moyen de traction, tel qu'un tracteur, comprenant un châssis (4) monté sur roues supports (6, 8, 10, 12), de préférence au moins quatre roues, une bobine (16) de stockage de film (2) étant prévue à l'intérieur dudit châssis (4), et étant entraînée en rotation relativement au châssis (4) par l'intermédiaire d'un moyen de transmission depuis une roue reposant sur le sol ; des moyens (20, 22) d'ouverture d'un sillon dans le sol au niveau de chaque bord (2a, 2b) dudit film (2) ; des moyens (24, 26) de maintien des bords du film (2) dans chaque sillon formé, pouvant comprendre des roues de plombage ; et des moyens (28, 30) d'enfouissement du film maintenus dans chaque sillon formé ; caractérisée en ce que :
- ladite bobine (16) est montée en rotation sur des rouleaux supports (32 à 37) ; et au moins une des roues supports (6, 8, 10, 12) du châssis (4), de préférence au moins une des roues supports (6, 8) disposées à l'avant du châssis dans le sens de traction (M), constitue une roue de traction entraînant en rotation certains rouleaux supports (32, 36) de la bobine (16) par l'intermédiaire de moyens de transmission d'entraînement (40) comprenant un variateur mécanique (60) permettant de faire varier à volonté le rapport de transmission entre la roue de traction (6, 8) et les rouleaux d'entraînement (32, 36) de la bobine (16) ;
- elle comprend des moyens (70) de plissage du film (2) dans le sens transversal pour donner du mou au film et permettre la levée des plantes, notamment des céréales, lesdits moyens étant disposés en-dessous du châssis (4) et comprennant au moins un ensemble de trois tubes détendeurs (72, 74, 76) à bord coudé, l'un des tube détendeur (76) étant disposé entre les deux autres tubes détendeurs (72, 74) à un niveau supérieur et en opposition.

2. Machine selon la revendication 1, caractérisée en ce qu'elle comprend des tubes (62, 64) ou rouleaux de contournement ou de renvoi du film (2) disposés en aval des rouleaux supports et/ou d'entraînement, par rapport au sens de déroulement du film (2).

3. Machine selon l'une des revendications 1 à 2, caractérisée en ce qu'elle comprend des tubes (62', 64') ou rouleaux de contournement ou de renvoi disposés en amont des rouleaux supports et/ou d'entraînement, par rapport au sens de déroulement du film (2).

4. Machine selon la revendication 5, caractérisée en ce qu'elle comprend un rouleau de renvoi supplémentaire (68) avant le dispositif de plissage, le cas échéant, ledit rouleau étant luimême entraîné par le moyen de transmission d'entraînement (40).

5. Machine selon l'une quelconque des revendications 1 à 7, caractérisée en ce qu'elle comprend des moyens de déplacement dans le sens transversal de l'ensemble des moyens permettant de modifier l'empattement du film (2), qui sont de préférence montés sur un chariot (tel que 80, 82), montés déplaçables transversalement sur un rail guide (tel que 84, 86).

## Claims

1. A machine for unrolling a plastic film (2) used in agriculture in crop growing, in particular market gardening, adapted to be drawn by a traction means such as a tractor, comprising a chassis (4) mounted on support wheels (6, 8, 10, 12), preferably at least four wheels, a film (2) storage spool (16) being provided inside the chassis (4) and being driven in rotation with respect to the chassis (4) via a transmission means from a wheel resting on the ground, means (20, 22) for opening up a furrow in the ground at the location of each end (2a, 2b) of the film (2), means (24, 26) for retaining the edges of the film (2) in each furrow formed which may comprise holding wheels and means (28, 30) for embedding the film held in each furrow formed, characterized in that:
- the spool (16) is mounted in rotation on support rollers (32-37) and at least one of the chassis (4) support wheels (6, 8, 10, 12), preferably at least one of the support wheels (6, 8) disposed at the front of the chassis in the direction of movement (M), forms a drive wheel driving certain support rollers (32, 36) of the spool (16) in rotation via drive transmission means (40) comprising a mechanical variator (60) so that the transmission ratio between the drive wheel (6, 8) and the drive rollers (32, 36) of the spool (16) can be varied at will,
- it comprises means (70) for folding the film (2) in the transverse direction to provide the film with slack and allow the growth of plants, in particular cereals, these means being disposed below the chassis (4) and comprising at least one assembly of three curved-edge slackening tubes (72, 74, 76), one of the slackening tubes (76) being disposed between the other two slackening tubes (72, 74) at a higher level and in opposition.

2. A machine as claimed in claim 1, characterized in that it comprises tubes (62, 64) or redirecting or guide rollers for the film (2) disposed downstream of the support and/or drive rollers with respect to the direction of unrolling of the film (2).

3. A machine as claimed in one of claims 1 or 2, characterized in that it comprises tubes (62', 64') or redirecting or guide rollers disposed upstream of the support and/or drive rollers with respect to the direction of unrolling of the film (2).

4. A machine as claimed in claim 5, characterized in that it comprises an additional guide roller (68) in front of the folding device, where necessary, this roller being driven by the drive transmission means (40).

5. A machine as claimed in one of claims 1 to 7, characterized in that it comprises means for the displacement in the transverse direction of the assembly of means allowing the spread of the film (2) to be modified, which are preferably mounted on a carriage (such as 80, 82) mounted to be displaced transversely on a guide rail (such as 84, 86).

## Patentansprüche

1. Maschine zum Abwickeln eines Kunststoff-Films (2) für Benutzung in der Landwirtschaft im Anbau, insbesondere im Gemüseanbau, bestimmt, mit einem Zugmittel, wie einem Traktor, gezogen zu werden, mit einem Fahrgestell (4), welches auf Stützrädern (6, 8, 10, 12) montiert ist, vorzugsweise zumindest vier Rädern, einer Spule (16) zur Lagerung des Films (2), vorgesehen im Inneren des Fahrgestells (4), die in Drehung relativ zum Fahrwerk (4) über ein Übertragungsmittel von einem auf dem Boden aufliegenden Rad versetzt wird; Mitteln (20, 22) zum Öffnen einer Furche im Boden auf der Höhe jedes. Randes (2a, 2b) des Films (2); Mitteln (24, 26) zum Halten der Ränder des Films (2) in jeder geformten Furche, die Räder aus Blei aufweisen können; und Mitteln (28, 30) zum Einfügen des Films, die in jeder geformten Furche gehalten sind; dadurch gekennzeichnet,
- daß die Spule (16) drehbar auf Stützrollen (32 bis 37) gelagert ist; und zumindest eines der Stützräder (6, 8, 10, 12) des Fahrgestells (4), vorzugsweise zumindest eines der Stützräder (6, 8), die im Zugsinn (M) vorn am Fahrgestell angeordnet sind, ein Antriebsrad bildet, welches bestimmte Stützrollen (32, 36) der Spule (16) in Drehung antreibt, über Mittel zur Übertragung des Antriebes (40), die einen mechanischen Wandler (60) aufweisen, der nach Belieben eine Veränderung des Übertragungsverhältnisses zwischen dem Antriebsrad (6, 8) und den Antriebsrollen (32, 36) der Spule (16) ermöglicht;
- daß sie Mittel (70) zum Falten des Films (2) in Querrichtung aufweist, um dem Film Weichheit zu geben und das Aufgehen von Pflanzen, insbesondere von Getreide, zu ermöglichen, wobei die genannten Mittel unterhalb des Fahrgestells (4) angeordnet sind und zumindest eine Gesamtheit aus drei Abspannrohren (72, 74, 76) mit abgewinkeltem Rand aufweist, wobei eines der Abspannrohre (76) zwischen den beiden anderen Abspannrohren (72, 74) auf einem höheren Niveau und entgegengesetzt angeordnet ist.

2. Maschine gemäß Anspruch 1, dadurch gekennzeichnet, daß sie Rohre (62, 64) oder Rollen zur Umlenkung oder zur Abgabe des Films (2) aufweist, die im Sinn des Abwickelns des Films (2) hinter den Rollen zum Abstützen und/oder Antreiben angeordnet sind.

3. Maschine gemäß einem der Ansprüche 1 oder 2, dadurch gekennzeichnet, daß sie Rohre (62', 64') oder Rollen zum Umlenken oder zur Abgabe aufweist, die im Sinn des Abwickelns des Films (2) vor den Rollen zum Abstützen und/oder zum Antreiben angeordnet sind.

4. Maschine gemäß Anspruch 3, dadurch gekennzeichnet, daß sie vor der Einrichtung zum Falten eine zusätzliche Rolle zum Abgeben (68) aufweist, wobei die Rolle ggf. selbst vom Mittel zur Übertragung des Antriebs (40) angetrieben ist.

5. Maschine gemäß einem der Ansprüche 1 bis 4, dadurch gekennzeichnet, daß sie Mittel zum Verschieben in Querrichtung der Gesamtheit von Mitteln hat, welche eine Veränderung der Spanne des Films (2) erlauben, die bevorzugt auf einem Wagen (so wie 80, 82) montiert sind, die in Querrichtung deplazierbar auf einer Führungsschiene (so wie 84, 86) montiert sind.
